# EUROPEAN PATENT SPECIFICATION

(11) **EP 1 796 289 B1**
(45) Date of publication and mention of the grant of the patent: **20.03.2013**
(21) Application number: 06125602.0
(22) Date of filing: 07.12.2006
(51) Int. Cl.: H04B 7/185, H04L 29/06

(54) **Apparatus for transmitting/receiving broadcasting and communication data in interactive satellite communication system based on DVB-S2**
Gerät zum Senden/Empfangen von Rundfunk- und Kommunikationsdaten in einem interaktiven Satelliten-Kommunikationssystem mit DVB-S2
Appareil de transmission et de réception de données de diffusion et de communication dans un système de communication par satellite interactif avec DVB-S2

(30) Priority: 08.12.2005 KR 20050119418; 30.08.2006 KR 20060083169
(43) Date of publication of application: 13.06.2007
(73) Proprietor: Electronics and Telecommunications Research Institute, Daejeon-city 305-350 (KR)
(72) Inventor: Shin, Min-Su, Yuseong-gu, Daejon 305-330 (KR); Chang, Dae-Ig, Seo-gu, Daejon 302-280 (KR); Oh, Deock-Gil, Seo-gu, Daejon 302-120 (KR)
(74) Representative: Betten & Resch

(56) References cited:
- EP-A1- 0 838 929
- EP-A1- 1 227 615
- WO-A2-02/102014
- GB-A- 2 406 483

## Description

### Field of the Invention

The present invention relates to an apparatus for transmitting/receiving broadcasting and communication data in an interactive satellite communication system based on Digital Video Broadcasting Satellite 2 (DVB-S2); and, more particularly, to an apparatus for transmitting/receiving broadcasting and communication data in an interactive satellite communication system based on the DVB-S2, which can maximize data transmission efficiency by directly transmitting an IP packet without using a Multi-Protocol Encapsulation (MPE)/Motion Picture Experts Groups-Transport Stream (MPEG-TS) encapsulation method, i.e., by using a non-encapsulation method, and simultaneously process communication data at a high speed by using a typical broadcasting data receiving method in a mobile station, and a method thereof.

### Description of Related Art

In general, when communication data of an IP packet format are used through a typical interactive satellite transmission system, a method for encapsulating the communication data based on a Multi-Protocol Encapsulation (MPE)/Picture Experts Groups-2 Transport Stream (MPEG-2 TS) packet structure and transmitting the communication data based on a specific modulating method is used. The MPE method is specified in Digital Video Broadcasting (DVB), which is a standardization group for a European broadcasting transmission standard, to make data broadcasting possible through a digital broadcasting network. The MPE method is a method for applying a data communication protocol to a digital broadcasting scope for uni-casting and multi-casting.

The MPE method is suggested to transmit communication data based on a digital broadcasting transmission/reception system at an early stage. The MPE method applies the data communication protocol to the digital broadcasting system to process communication data transmitted through a broadcasting network in a receiver based on the same as the method for data transmitted through a communication network such as Ethernet. Generally, the MPE also uses an MPEG-TS format for connection with the digital broadcasting network. The MPE method encapsulates an IP packet, divides/re-encapsulates the IP packet according to the MPEG-TS standard and transmits the IP packet.

However, since the MPE/MPEG-2 TS packet encapsulating method has a format of inserting additional header information to a pure IP packet, it is known that overhead of larger than 10% generally occurs. The overhead increases cost unnecessarily in an application field requiring efficient data transmission such as an expensive transmission network including a satellite network and a narrow-band mobile communication network.

Accordingly, a method for directly transmitting the IP packet without encapsulating the MPE/MPEG-2 TS packet has been studied. Also, a stream for directly transmitting the IP packet without encapsulation is defined in a Digital Video Broadcasting-Satellite 2 (DVB-S2) standard, which is standardized in early 2005.

However, since the method for transmitting communication data such as an IP packet without encapsulation such that the receiver can normally receive the IP packet, and a procedure for receiving a non-encapsulated stream are not defined, a more specific method is required.

### Summary of the Invention

It is, therefore, an object of the present invention to provide an apparatus for transmitting/receiving broadcasting and communication data in an interactive satellite communication system based on DVB-S2, which can maximize data transmission efficiency by directly transmitting an IP packet without using a Multi-Protocol Encapsulation (MPE)/Motion Picture Experts Groups-Transport Stream (MPEG-TS) encapsulation method, i.e., by using a non-encapsulation method, and simultaneously process communication data at high-speed by using a typical broadcasting data receiving method in a mobile station, and a method thereof.

Other objects and advantages of the invention will be understood by the following description and become more apparent from the embodiments in accordance with the present invention, which are set forth hereinafter. It will be also apparent that objects and advantages of the invention can be embodied easily by the means defined in claims and combinations thereof.

The present invention is defined in the independent claims. The dependent claims define embodiments.

In accordance with an aspect, there is provided an apparatus for transmitting/receiving broadcasting and communication data in an interactive satellite communication system, the apparatus including: a backward link demodulator for performing demodulation and channel decoding on each Signal-to-Noise Ratio (SNR) information and backward link traffic data transmitted through a central station Radio Frequency (RF) processor for performing any one between up-converting and down-converting on a frequency of inputted data; a central station connector which is connected to the Internet and transmits/receives communication data based on an Internet Protocol (IP) packet; a broadcasting data creator for creating the broadcasting data of a Moving Picture Experts Group Transport Stream (MPEG-TS) packet format; and a forward link modulator for separately transmitting the broadcasting data of the MPEG-TS packet format and the IP packet based-communication data on a baseband frame basis by using a plurality of transmitting methods simultaneously, applying different transmitting methods to each mobile station based on the SNR, transmitting a plurality of broadcasting streams based on different transmitting methods simultaneously, and mapping and transmitting the communication data of the IP packet format inputted from the central station connector according to different transmitting methods based on a destination IP address.

In accordance with another aspect , there is provided an apparatus for receiving broadcasting and communication data in an interactive satellite communication system, the apparatus including: a forward link demodulator for performing mode and stream de-adaptive, demodulation and channel decoding on the broadcasting and communication data on a baseband frame basis transmitted from a mobile station RF processor for performing any one between up-converting and down-converting on a frequency of inputted data, outputting the broadcasting data in a MPEG-TS packet format, transforming the communication data based on an IP packet into the MPEG-TS packet and outputting the communication data; an MPEG coder for demultiplexing the broadcasting and communication data of the MPEG-TS packet format transmitted from the forward link demodulator; a data processor for transmitting/receiving the communication data with a user terminal connected to the receiving apparatus and creating an SNR; and a backward link modulator for performing modulation and channel coding on the SNR and the backward link traffic data transmitted from the data processor and transmitting the SNR and the backward link traffic data to the mobile station RF processor.

The present invention can transmit data to many mobile stations having different reception channel environments in an interactive satellite communication system for transmitting the typical satellite broadcasting data and the communication data of the IP packet format based on the DVB-S2 standard according to a transmitting method, which is proper to the reception channel environment. Also, the present invention transmits the communication data according to a method, which does not have overhead by typical MPE/MPEG-2 TS encapsulation. In the central station, the broadcasting data of a plurality of MPEG-TS packet formats and the communication data of the IP packet format can be simultaneously transmitted according to many transmitting methods. In the mobile station, the broadcasting and communication data can be received at high-speed based on the typical broadcasting private terminal.

### Brief Description of the Drawings

The above and other objects and features of the present invention will become apparent from the following description of the preferred embodiments given in conjunction with the accompanying drawings, in which:
Fig. 1 is a block diagram showing an entire apparatus for transmitting/receiving broadcasting and communication data in an interactive satellite communication system based on Digital Video Broadcasting Satellite (DVB-S2) in accordance with an embodiment of the present invention;
Fig. 2 is a block diagram illustrating a DVB-S2 forward link modulator of the transmitting apparatus in the interactive satellite communication system based on DVB-S2 in accordance with the embodiment of the present invention;
Fig. 3 is a block diagram illustrating a DVB-S2 forward link demodulator among the broadcasting and communication data in the DVB-S2 interactive satellite communication system in accordance with the embodiment of the present invention;
Fig. 4 is a flowchart describing a DVB-S2 forward link modulating procedure of the DVB-S2 forward link modulator in an apparatus for transmitting the broadcasting and communication data in accordance with an embodiment of the present invention;
Fig. 5 is a flowchart describing the DVB-S2 forward link demodulation procedure of the DVB-S2 forward link demodulator in the apparatus for receiving broadcasting and communication data in accordance with the embodiment of the present invention; and
Fig. 6 is a flowchart describing a procedure for transmitting/receiving the broadcasting and communication data in the interactive satellite communication system based on the DVB-S2 in accordance with the embodiment of the present invention.

### Detailed Description of the Invention

Other objects and advantages of the present invention will become apparent from the following description of the embodiments with reference to the accompanying drawings. Therefore, those skilled in the field of this art of the present invention can embody the technological concept and scope of the invention easily. In addition, if it is considered that detailed description on a related art may obscure the points of the present invention, the detailed description will not be provided herein. The preferred embodiments of the present invention will be described in detail hereinafter with reference to the attached drawings.

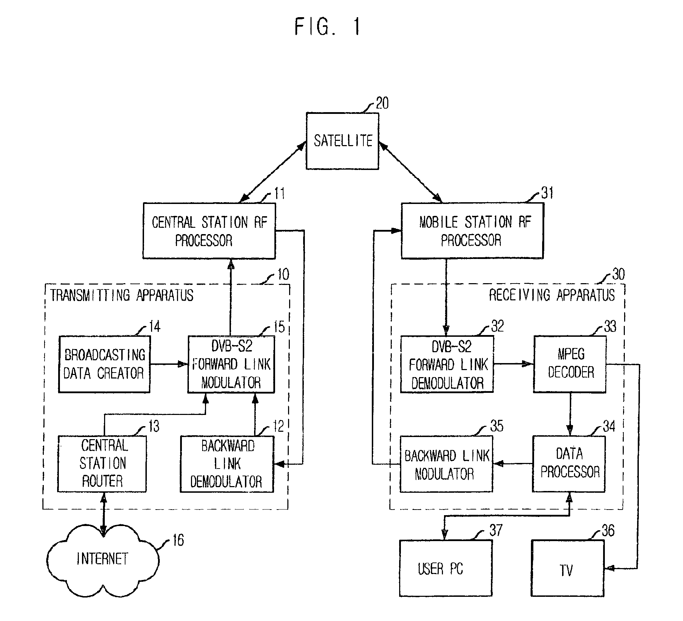

Fig. 1 is a block diagram showing an entire apparatus for transmitting/receiving broadcasting and communication data in an interactive satellite communication system based on DVB-S2 in accordance with an embodiment of the present invention.

The interactive satellite communication system based on the DVB-S2 includes a transmitting apparatus 10, which is a central station, a satellite 20 and a receiving apparatus 30, which is a mobile station. The transmitting apparatus 10 transmits communication data transmitted from the Internet 16 to the receiving apparatus 30 through the satellite 20. The satellite 20 makes data transmission/reception between the transmitting apparatus 10 and the receiving apparatus 30 by connecting the transmitting apparatus 10 and the receiving apparatus 30. The receiving apparatus 30 transmits communication data transmitted from the transmitting apparatus 10 to a user Personal Computer (PC) 37 connected by a network through the satellite 20.

To be specific, the apparatus for transmitting the broadcasting and communication data in the interactive satellite communication system based on the DVB-S2, which is called the transmitting apparatus 10, includes a central station Radio Frequency (RF) processor 11, a backward link demodulator 12, a central station router 13, a broadcasting data creator 14, and a Digital Video Broadcasting-Satellite 2 (DVB-S2) forward link modulator 15. The central station RF processor 11 performs any one between up-converting and down-converting on a frequency of inputted data.

The backward link demodulator 12 performs demodulation and channel decoding on backward link data, which include Signal-to-Noise Ratio (SNR) and backward link traffic data, received through the central station RF processor 11. The central station router 13 is connected to the external Internet 16 and transmits/receives communication data with the Internet 16. The broadcasting data creator 14 creates broadcasting data. The DVB-S2 forward link modulator 15 forms broadcasting and communication data of baseband (BB) frames based on a DVB-S2 standard, determines a transmitting method of each receiving apparatus 30, and performs mode and stream adapting, modulation and channel coding based on diverse transmitting methods.

Functions of each constitutional element of the transmitting apparatus 10 will be described in detail.

The central station RF processor 11 performs down-converting on the frequency of the SNR and the backward link traffic data, which are the backward link data transmitted from the receiving apparatus 30 through the satellite 20, and transmits the frequency to the backward link demodulator 12. Also, the central station RF processor 11 performs up-convert on the frequency of the broadcasting and communication data transmitted from the DVB-S2 forward link modulator 15 and transmits the frequency of the broadcasting and communication data to the receiving apparatus 30 through the satellite 20.

The backward link demodulator 12 receives the SNR and the backward link traffic data, which are the backward link data transmitted from the receiving apparatus 30 through the satellite 20, from the central station RF processor 11, performs demodulation and channel decoding on the backward link data and transmits the SNR among the backward link data to the DVB-S2 forward link modulator 15.

The central station router 13 receives communication data of an IP packet format to be transmitted from the external Internet 16 to the receiving apparatus 30, and transmits the communication data to the DVB-S2 forward link modulator 15.

The broadcasting data creator 14 creates broadcasting data and transmits the broadcasting data to the DVB-S2 forward link modulator 15.

The DVB-S2 forward link modulator 15 forms the communication data transmitted from the central station router 13 and the broadcasting data transmitted from the broadcasting data creator 14 in a format of baseband frame based on the DVB-S2 standard. The DVB-S2 forward link modulator 15 determines a transmitting method, which includes a modulating method and a channel coding method, to be used to transmit the communication data and the broadcasting data to each receiving apparatus 30 based on the SNR transmitted from the backward link demodulator 12. Subsequently, the DVB-S2 forward link modulator 15 performs mode and stream adapting, modulation and channel coding on the communication data and the broadcasting data, i.e., the baseband frame, based on the determined transmitting method including the modulating method and the channel coding method, and transmits the baseband frame to the receiving apparatus 30 through the satellite 20.

Meanwhile, a formation of the apparatus for receiving broadcasting and communication data in the interactive satellite communication system based on the DVB-S2, which is the receiving apparatus 30, will be described in detail. The receiving apparatus 30 includes a mobile station RF processor 31, a DVB-S2 forward link demodulator 32, an MPEG decoder 33, a da.ta processor 34 and a backward link modulator 35.

The mobile station RF processor 31 performs any one between up-converting and down-converting on a frequency of the inputted data. The DVB-52 forward link demodulator 32 performs mode and stream de-adapting, demodulation and channel decoding on the baseband frame transmitted from the mobile station RF processor 31 and transforms the baseband frame into an MPEG-TS packet format based on the DVB-S2 standard. The MPEG decoder 33 demultiplexes the broadcasting and communication data of the MPEG-TS packet format transmitted from the DVB-S2 forward link demodulator 32, just as Packet ID (PID) filtering and section filtering. The data processor 34 transmits/receives communication data with the user PC 37 connected to the receiving apparatus 30 and creates the SNR. The backward link modulator 35 performs modulation and channel coding on the backward link data including the SNR and the backward link traffic data transmitted from the data processor 34.

Each constitutional element of the receiving apparatus 30 having the formation as described above will be described in detail.

The mobile station RF processor 31 down-converts the frequency of the baseband frame including broadcasting and communication data transmitted from the transmitting apparatus 10 through the satellite 20 and transmits the frequency of the baseband frame to the DVB-S2 forward link demodulator 32. The mobile station RF processor 31 up-converts the frequency of the backward link data including the SNR and the backward link traffic data transmitted from the backward link modulator 35 and transmits the frequency of the backward link data to the transmitting apparatus 10 through the satellite 20.

The DVB-S2 forward link demodulator 32 performs mode and stream de-adaptive, demodulation and channel decoding on the baseband frame transmitted through the mobile station RF processor 31 based on the DVB-S2 standard, transforms the baseband frame into the MPRG-2 TS packet format based on the DVB-S2 standard and transmits the baseband frame to the MPEG decoder 33.

The MPEG decoder 33 demultiplexes the broadcasting and communication data of the MPEG-TS packet format transmitted from the DVB-S2 forward link demodulator 32, just as PID filtering and section filtering, outputs the broadcasting data to a television (TV) 36 and transmits the communication data to the data processor 34. The PID for PID filtering on the communication data is set up by a mobile station operator.

The data processor 34 performs TS packet recombination on the communication data of the MPEG-TS packet format transmitted from the MPEG decoder 33, forms an MPE section and extracts an IP packet stream. An IP forwarding function is used to transmit the communication data to the user PC 37 through an Ethernet of the receiving apparatus 30. Also, the data processor 34 forms an Ethernet frame by creating an Ethernet header in the extracted IP packet based on the hardware address of the receiving apparatus 30, which is a destination hardware address. The data processor 34 determines the channel reception state of the receiving apparatus 30, creates the SNR and transmits the created SNR and the backward link traffic data transmitted from the user PC 37 to the backward link modulator 35.

Generally, when the IP packet stream is formed of the baseband frame, the communication data to be transmitted to a plurality of receiving apparatuses 30 are mixed in one baseband frame. When the IP packets to be transmitted to other receiving apparatus 30 is transmitted to the user PC 37 through the Ethernet, the IP packets are filtered in the inside of Transmission Control Protocol/Internet Protocol (TCP/IP) of the user PC 37. Accordingly, the IP packet transmitting method is normally operated.

The user PC 37 is an apparatus for receiving communication data to receive an actual service. The user PC 37 transmits/receives the communication data through the data processor 34.

The backward link modulator 35 receives the backward link traffic data and the SNR from the data processor 34 and performs modulation and channel coding to transmit the backward link traffic data and the SNR to the satellite.

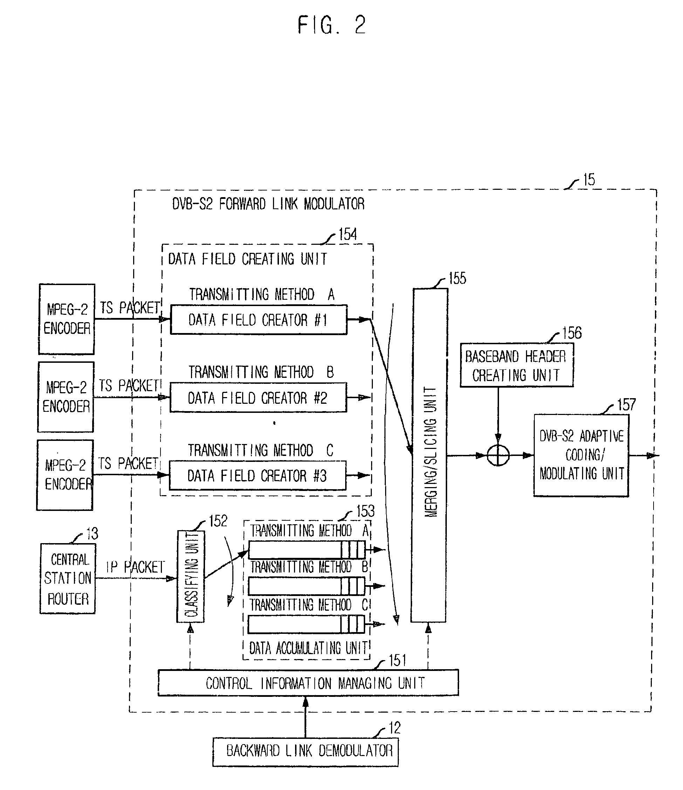

Fig. 2 is a block diagram illustrating the DVB-S2 forward link modulator of the transmitting apparatus in a DVB-S2 interactive satellite communication system in accordance with the embodiment of the present invention.

The DVB-S2 forward link modulator 15 of the transmitting apparatus 10 includes a control information managing unit 151, a classifying unit 152, a data accumulating unit 153, a data field creating unit 154, a merging/slicing unit 155, a baseband header creating unit 156 and a DVB-S2 adaptive coding/modulating unit 157.

The control information managing unit 151 determines a transmitting method, which includes the modulating method and the channel coding method, to be used in transmission to each receiving apparatus 30 based, on each SNR transmitted from the backward link demodulator 12. The control information managing unit 151 manages the determined transmitting method of each receiving apparatus 30, a mobile station identification (ID) allocated to each receiving apparatus 30, destination IP address information of the user PC 37 mapped on the mobile station ID. The classifying unit 152 classifies the communication data of the IP packet format of the control information managing unit 151 according to each transmitting method allocated to the corresponding receiving apparatus 30 based on the destination IP address.

The data accumulating unit 153 accumulates the communication data of the IP packet format classified by the classifying unit 152 in a transmission queue according to the transmitting method including the modulating method and the channel coding method. The data field creating unit 154 forms a baseband data field to transmit the broadcasting data of the MPEG-2 TS packet format according to the frame.

The merging/slicing unit 155 slices the transmission data for each transmitting method, which is stored in a buffer of the data accumulating unit 153 and the data field creating unit 154, as long as a pre-defined transmission data field length. Also, the merging/slicing unit 155 determines the buffer of the data field creating unit 154 and the data accumulating unit 153 accumulating data to be outputted, i.e., the broadcasting and communication data. The baseband header creating unit 156 forms a baseband frame. The DVB-S2 adaptive coding/modulating unit 157 performs modulation and channel coding on the baseband frame.

A function of each constitutional element of the DVB-S2 forward link modulator 15 having the formation as described above will be described in detail.

It is assumed that the DVB-S2 forward link modulator 15 uses three types of transmitting methods including the modulating method and the channel coding method.

The communication data of the IP packet format are inputted as one through the central station router 13, accumulated in the transmission queue of the inside of the data accumulating unit 153 according to the transmitting method by the classifying unit 152 of the DVB-S2 forward link modulator 15.

The broadcasting data of the TS packet format are inputted to the data field creating unit 154 according to the transmitting method through an MPEG encoder as many as the transmitting methods determined by the system operator. An individual transmitting method is determined before a system operation in an input port of each data field creating unit 154.

Since the communication data of the IP packet format inputted from the central station router 13 include all of the communication data transmitted to all of the accessed receiving apparatuses 30, the communication data of the IP packet format should be classified by the classifying unit 152 according to each transmitting method based on the SNR of the destination receiving apparatus 30.

The classifying unit 152 is controlled by the IP address information of the user PC 37 connected to a specific receiving apparatus 30 provided from the control information managing unit 151 and the transmitting method information for the corresponding receiving apparatus 30. The transmitting method is determined by the control information managing unit 151.

The control information managing unit 151 determines the transmitting method to be used to transmit the SNR transmitted from each receiving apparatus 30 through the backward link demodulator 12 of the transmitting apparatus 10 to each receiving apparatus 30. Also, the control information managing unit 151 has the classifying unit 152 to classify the communication data of the IP packet format according to different transmitting methods based on the destination IP address with reference to the determined transmitting method information.

The data field creating unit 154 for the broadcasting data of the MPEG-2 TS packet format is formed of internal function blocks defined in the DVB-S2 standard. The data field creating unit 154 includes a cyclic redundancy check (CRC) encoding block of the MPEG-TS unit, an input synchronizing block, a null packet removing block and a data buffer of a predetermined, length.

In case of the communication data of the IP packet format, the data field creating unit 154 does not include the internal function blocks and is formed of simple data buffers. Therefore, the communication data of the IP packet format are transmitted to the receiving apparatus 30 through the satellite 20 in the IP packet format without an individual encapsulation procedure.

The data inputted to each transmitting method buffer are outputted by the merging/slicing unit 155. A slicer of the merging/slicing unit 155 slices data as long as the transmission data field length defined according to the transmitting methods in the buffer of the data accumulating unit 153 and the data field creating unit 154. The merger selects one buffer among many buffers to output data. The functions of the slicer and the merger are controlled by the control information managing unit 151. The priority of each transmitting method can be defined and a highly efficient scheduling algorithm can be used.

When the data field creating unit 154 for the broadcasting data of the TS packet format and the data accumulating unit 153 for the communication data of the IP packet format output data to transmit the data to the satellite, the merger and slicer may adopt a Round Robin method or other scheduling methods. The baseband frame is used to transmit the broadcasting and communication data in the DVB-S2 standard.

The baseband header creating unit 156 forms a baseband frame by creating a baseband header including information on characteristics of the data field outputted by the merging/slicing unit 155 and adding the baseband header to the head of the baseband data field. Subsequently, the baseband header creating unit 156 performs modulation and channel coding on the baseband frame through the DVB-S2 adaptive coding/modulating unit 157 and transmits the baseband frame to the satellite 20 through the central station RF processor 11.

The baseband frame is formed by inserting the baseband header outputted in the baseband header creating unit 156 into the data field outputted by the merging/slicing unit 155. That is, the input data stream is encapsulated again to transmit the MPEG-TS packet or the IP packet to one transmission carrier according to different transmitting methods.

The lengths of the baseband frames are differed according to a corresponding transmitting method in order to maintain a predetermined transmission symbol rate while using different transmitting methods. The lengths of the channel encoder input frames are differently specified to maintain the length of the channel encoder output stream of 64800 bit or 16400 bit according to the transmitting methods.

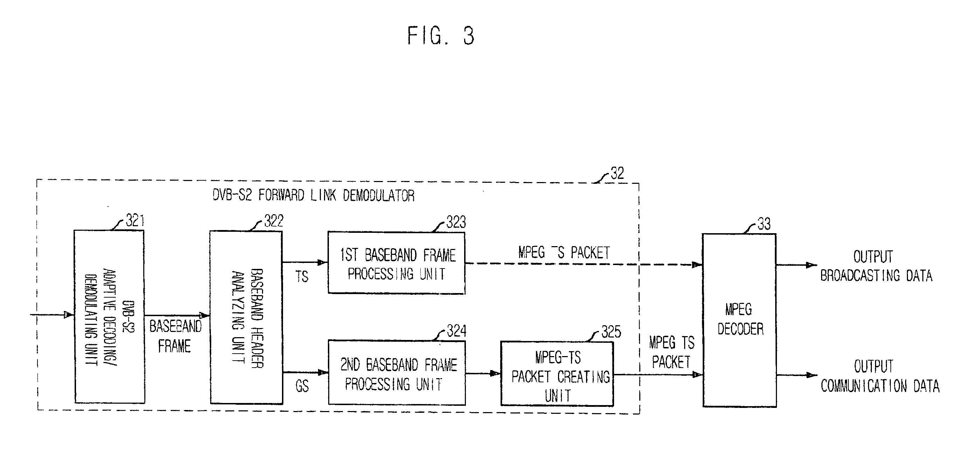

Fig. 3 is a block diagram illustrating the DVB-S2 forward link demodulator among the broadcasting and communication data in the DVB-S2 interactive satellite communication system in accordance with the embodiment of the present invention.

The DVB-S2 forward link demodulator 32 includes a DVB-S2 adaptive decoding/demodulating unit 321, a baseband header analyzing unit 322, a first baseband frame processing unit 323, a second baseband frame processing unit 324 and an MPEG-TS packet creating unit 325.

The DVB-S2 adaptive decoding/demodulating unit 321 performs demodulation and channel decoding on the baseband frame transmitted through the mobile station RF processor 31. The baseband header analyzing unit 322 extracts and analyzes the baseband header of the baseband frame transmitted from the DVB-S2 adaptive decoding/demodulating unit 321. The first baseband frame processing unit 323 outputs the broadcasting data of the MPEG-TS packet format based on the DVB-S2 standard. The second baseband frame processing unit 324 receives generic stream (GS) stream of the IP packet format, i.e., the communication data, from the baseband header analyzing unit 322 and transmits the communication data to the MPEC-TS packet creating unit 325. The MPEG-TS packet creating unit 325 transforms the communication data of the IP packet format into the communication data of the MPEG-TS packet format and performs demultiplexing. A function of each constitutional element of the DVB-S2 forward link demodulator 32 will be described in detail.

The DVB-S2 adaptive decoding/demodulating unit 321 of the DVB-S2 forward link demodulator 32 performs demodulation and channel decoding on the baseband frame transmitted from the transmitting apparatus 10 and transmits the baseband frame to the baseband header analyzing unit 322. The baseband header analyzing unit 322 performs CRC-8 decoding on the baseband frame transmitted from the DVB-S2 adaptive decoding/demodulating unit 321. When there is no error, the baseband header analyzing unit 322 extracts a baseband header from the baseband frame, recognizes and transmits a transmitting method of the baseband frame, data field length information and format of the data, i.e., MPEG-TS/GS, to the first baseband frame processing unit 323 or the second baseband frame processing unit 324. The baseband header analyzing unit 322 transmits the broadcasting data of the MPEG-TS packet format to the first baseband frame processing unit 323 and transmits the GS stream of the IP packet format, i.e., the communication data, to the second baseband frame processing unit 324.

The first baseband frame processing unit 323 performs function blocks defined in the DVB-S2 standard, e.g., CRC decoding, null-packet reinsert and input stream synchronization on the broadcasting data of the MPEG-TS packet format, and transmits the broadcasting data in the MPEG-TS packet format to the MPEG decoder 33.

Differently from the broadcasting data of the MPEG-TS packet format, the GS stream of the IP packet format is not processed as an MPEG decoder chip for general digital broadcasting. Accordingly, data stream, which is not encapsulated into the MPEG-TS packet format, should be processed as software such as a device driver. Generally, the method is not a proper method for a high-speed data process. To solve the problem, the DVB-S2 forward link demodulator 32 adds the MPEG-TS packet creating unit 325, transforms the GS stream of the IP packet format into the MPEG-TS packet format and transmits the GS stream of the IP packet format to the MPEG decoder 33. The MPEG decoder 33 performs demultiplexing such as PID filtering and section filtering on the GS stream of the IP packet format to process data at high-speed.

When the MPEG-TS packet creating unit 325 transforms the GS stream of the IP packet format into the TS packet format, the MPEG-TS packet creating unit 325 should transform the GS stream of the IP packet format into the MPE format at a first step and transform the GS stream of the IP packet format into the MPEG-TS packet format at a second step. When the MPEG-TS packet creating unit 325 directly transforms the IP packet stream, which is outputted as a predetermined baseband frame length, into the TS packet, a problem is generated in recombination in the data processor 34 of the receiving apparatus 30, the first step of transform into the MPE format should be processed.

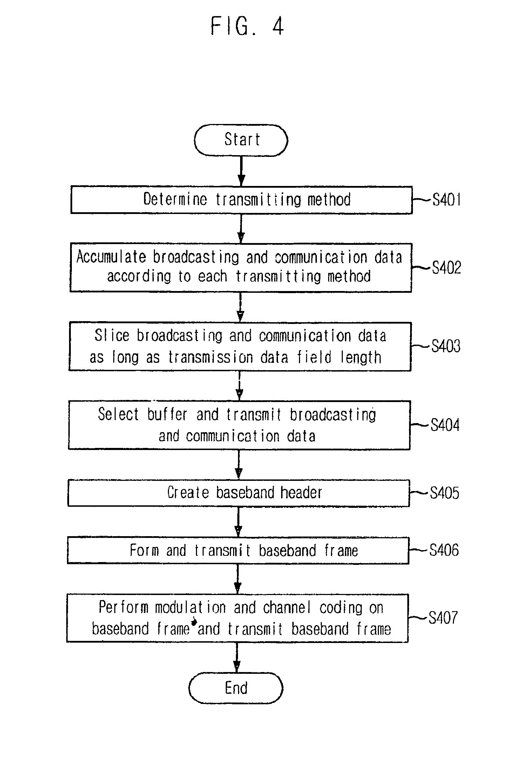

Fig. 4 is a flowchart describing a DVB-S2 forward link modulating procedure of the DVB-S2 forward link modulator in the apparatus for transmitting the broadcasting and communication data in accordance with an embodiment of the present invention.

At step S401, the control information managing unit 151 receives the SNR from the backward link demodulator 12 and determines a transmitting method to be used in transmission to each receiving apparatus 30.

At step S402, the classifying unit 152 checks transmitting method information to be used in transmission to the receiving apparatus 30 stored in the control information managing unit 151 based on the destination IP address of the communication data of the IP packet format transmitted from the central station router 13. Subsequently, the classifying unit 152 accumulates the transmitting method information in a transmission queue of the data accumulating unit 153 according to each transmitting method. The data field creating unit 154 accumulates the broadcasting data of the TS packet format transmitted from the MPEG-2 encoder according to each transmitting method.

At step S403, the merging/slicing unit 155 slices the communication data of the IP packet format transmitted from the data accumulating unit 153 and the broadcasting data of the TS packet format transmitted from the data field creating unit 154 based on the transmission data field length information defined according to each transmitting method stored in the control information managing unit 151. At step S404, the merging/slicing unit 155 selects a buffer of the broadcasting and communication data to be outputted and transmits the broadcasting and communication data accumulated in the selected buffer to the baseband header creating unit 156.

At step S405, the baseband header creating unit 156 creates a baseband header including information showing characteristics of the broadcasting and communication data field outputted by the merging/slicing unit 155 and adds the baseband header to the head of the baseband data field. At step S406, the baseband header creating unit 156 forms a baseband frame and transmits the baseband frame to the DVB-S2 adaptive coding/modulating unit 157.

At step S407, the DVB-S2 adaptive coding/modulating unit 157 performs modulation and channel coding on the baseband frame transmitted from the baseband header creating unit 156 and transmits the baseband frame to the satellite 20 through the central station RF processor 11.

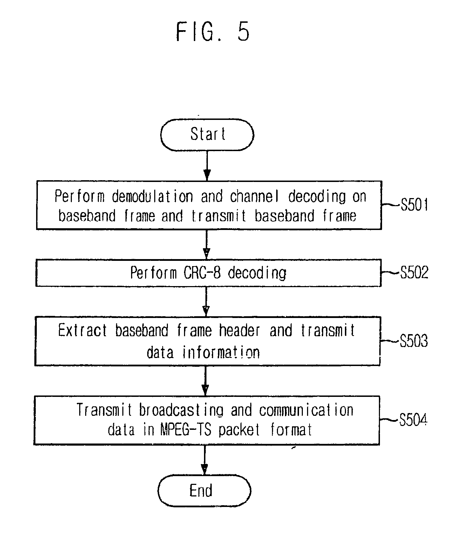

Fig. 5 is a flowchart describing a DVB-S2 forward link demodulating procedure of the DVB-S2 forward link demodulator in the apparatus for receiving broadcasting and communication data in accordance with the embodiment of the present invention.

At step S501, the DVB-S2 adaptive decoding/demodulating unit 321 performs demodulation and channel decoding on the baseband frame transmitted from the transmitting apparatus 10 and transmits the baseband frame to the baseband header analyzing unit 322.

At step S502, the baseband header analyzing unit 322 performs CRC-8 decoding on the baseband frame transmitted from the DVB-S2 adaptive decoding/demodulating unit 321. At step S503, the baseband header analyzing unit 322 extracts the baseband header from the baseband frame and recognizes and transmits a transmitting method of the baseband frame, data field length information and the format of the data, i.e., MPEG-TS/GS, to the first baseband frame processing unit 323 or the second baseband frame processing unit 324.

The baseband header analyzing unit 322 transmits the broadcasting data of the MPEG-TS packet format to the first baseband frame processing unit 323 and transmits the GS stream of the IP packet format to the second baseband frame processing unit 324.

At step S504, the first baseband frame processing unit 323 performs CRC decoding, null-packet reinsert and input stream synchronization on the broadcasting data of the MPEG-TS packet format and transmits the broadcasting data in the MPEG-TS packet format to the MPEG decoder 33. The second baseband frame processing unit 324 transmits the GS stream of the IP packet format to the MPEG-TS packet creating unit 325. Subsequently, the second baseband frame processing unit 324 transforms the GS stream of the IP packet format into the MPEG-TS packet format and transmits the GS stream to the MPEG decoder 33.

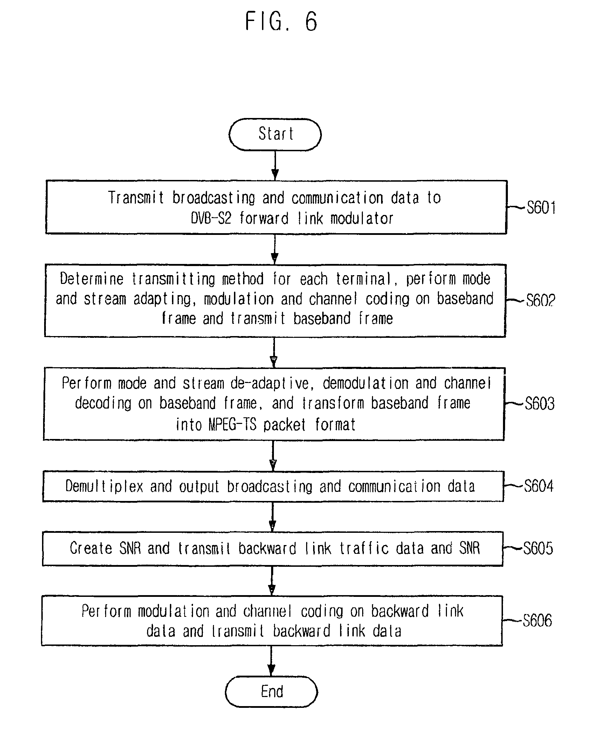

Fig. 6 is a flowchart describing a procedure for transmitting/receiving the broadcasting and communication data in the interactive satellite communication system based on the DVB-S2 in accordance with the embodiment of the present invention.

At step S601, the central station router 13 of the transmitting apparatus 10 receives the communication data of the TP packet format to be transmitted from the external Internet 16 to the receiving apparatus 30 and transmits the communication data of the IP packet format to the DVB-S2 forward link modulator 15. The broadcasting data creator 14 creates and transmits the broadcasting data to the DVB-S2 forward link modulator 15.

At step S602, the DVB-S2 forward link modulator 15 forms the communication data transmitted from the central station router 13 and the broadcasting data transmitted from the broadcasting data creator 14 into the baseband frame based on the DVB-S2 standard. The DVB-S2 forward link modulator 15 determines a transmitting method to be used in transmission to each receiving apparatus 30 based on the SNR transmitted from the backward link demodulator 12. The DVB-S2 forward link modulator 15 performs mode and stream adapting, modulation and channel coding on the baseband frame according to the determined transmitting method. Subsequently, the DVB-S2 forward link modulator 15 transmits the baseband frame to the receiving apparatus 30 through the central station RF processor 11.

At step S603, the DVB-S2 forward link demodulator 32 of the receiving apparatus 30 performs mode and stream de-adaptive, demodulation and channel decoding on the baseband frame transmitted from the mobile station RF processor 31. The DVB-S2 forward link demodulator 32 transforms the baseband frame into the MPEG-TS packet format based on the DVB-S2 standard and transmits the baseband frame to the MPEG decoder 33.

At step S604, the MPEG decoder 33 performs demultiplexing such as PID filtering and section filtering on the broadcasting and communication data of the MPEG-TS packet format transmitted from the DVB-S2 forward link demodulator 32. The MPEG decoder 33 outputs the broadcasting data to the TV 36 and transmits the communication data to the data processor 34.

At step S605, the data processor 34 determines a channel reception state of the receiving apparatus 30 and creates the SNR. Subsequently, the data processor 34 transmits the communication data transmitted from the MPEG decoder 33 to the user PC 37 and transmits the backward link traffic data transmitted from the user PC 37 and the created SNR to the backward link modulator 35.

At step S606, the backward link modulator 35 receives the backward link data, i.e., the SNR and the backward link traffic data, from the data processor 34. Subsequently, the backward link modulator 35 performs modulation and channel coding on the backward link data and transmits the backward link data to the transmitting apparatus 10 through the mobile station RF processor 31.

As described above, the interactive satellite communication system based on the DVB-S2 standard of the present invention can improve transmission efficiency in the system using an expensive satellite by suggesting a non-encapsulation transmitting method and a method for receiving data in the receiving apparatus and processing the data at high-speed instead of a typical IP packet transmitting method.

The present application contains subject matter related to Korean patent applications No. 2005-0119418 and No. 2006-0083169, filed with the Korean Intellectual Property Office on December 8, 2005 and August 30, 2006.

While the present invention has been described with respect to certain preferred embodiments, it will be apparent to those skilled in the art that various changes and modifications may be made without departing from the scope of the invention as defined in the following claims.

## Claims

1. An apparatus for transmitting broadcasting and communication data (10) in an interactive satellite communication system, **characterized by**:
a backward link demodulating means (12) for performing demodulation and channel decoding on Signal-to-Noise Ratio (SNR) information and backward link traffic data transmitted from a plurality of receiving apparatuses (30), through a central station Radio Frequency (RF) processing means (11) for performing up-converting and down-converting on a frequency of inputted data;
a central station connecting means (13) which connects to the Internet and transmits/receives communication data based on an Internet Protocol (IP) packet;
a broadcasting data creating means (14) for creating the broadcasting data of a Moving Picture Experts Group Transport Stream (MPEG-TS) packet format; and
a forward link modulating means (15) for separately transmitting the broadcasting data of the MPEG-TS packet format and the IP packet based-communication data on a baseband frame basis to each receiving apparatus (30) by using one of a plurality of transmitting methods simultaneously, applying a transmitting method to each receiving apparatuses (30) based on the SNR, transmitting a plurality of broadcasting streams based on the transmitting method applied to each receiving apparatus (30) simultaneously, and mapping and transmitting the communication data of the IP packet format inputted from the central station connecting means (13) according to the transmitting method applied to each receiving apparatus (30) based on a destination IP address.

2. The transmitting apparatus (10) as recited in claim 1, wherein the forward link modulating means (15) includes:
a control information managing unit (151) for determining the transmitting method to be used in transmission to each receiving apparatus (30) based on each SNR transmitted from the backward link demodulating means (12), and managing the transmitting method of each receiving apparatus (30), mobile station identification (ID) allocated to each receiving apparatus (30), and destination IP address information of a user Personnel Computer (PC) (37) mapped on the mobile station ID;
a classifying unit (152) for classifying the broadcasting and communication data according to each transmitting method allocated to each receiving apparatus (30);
a data accumulating unit (153) for accumulating the communication data of the classified IP packet format in a transmission queue according to each transmitting method;
a data field creating unit (154) for forming a baseband data field to transmit the broadcasting data of the MPEG-2 TS packet format according to each frame;
a slicing/determining unit (155) for slicing transmission data of each transmitting method stored in a buffer of the data accumulating unit (153) and the data field creating unit (154) as long as a transmission data field length defined in advance and determining the buffer of the data field creating unit (154) and the data accumulating unit (153) accumulating the data broadcasting and communication data to be outputted;
a baseband header creating unit (156) for forming a baseband frame; and
a Digital Video Broadcasting-Satellite 2 (DVB-S2) adaptive coding/modulating unit (157) for performing modulation and channel coding on the baseband frame.

3. The transmitting apparatus (10) as recited in claim 1 or 2, wherein each transmitting method operates one transmission queue in the data accumulating unit (153).

4. The transmitting apparatus (10) as recited in one of claims 1 to 3, wherein the slicing/determining unit (155) defines a priority of each transmitting method.

5. The transmitting apparatus as recited in one of claims 1 to 4, wherein the baseband header creating unit (156) forms a baseband frame by creating a baseband header showing characteristics of the data field and adding the baseband header to a head of the baseband data field.

6. An apparatus for receiving broadcasting and communication data (30) in an interactive satellite communication system, **characterized by**:
a forward link demodulating means (32) for performing mode and stream de-adaptive, demodulation and channel decoding on the broadcasting and communication data on a baseband frame basis transmitted from a transmitting apparatus (10), through a mobile station Radio Frequency (RF) processing means (31) for performing up-converting and down-converting on a frequency of inputted data, outputting the broadcasting data in a Moving Picture Experts Group Transport Stream (MPEG-TS) packet format, transforming the communication data based on an Internet Protocol (IP) packet into the MPEG-TS packet and outputting the communication data;
a Motion Picture Experts Groups (MPEG) decoding means (33) for demultiplexing the broadcasting and communication data of the MPEG-TS packet format transmitted from the forward link demodulating means (32);
a data processing means (34) for transmitting/receiving the communication data with a user terminal connected to the receiving apparatus (30) and creating a Signal-to-Noise Ratio (SNR); and
a backward link modulating means (35) for performing modulation and channel coding on the SNR and the backward link traffic data transmitted from the data processing means (34) and transmitting the SNR and the backward link traffic data to the mobile station RF processing means (31).

7. The receiving apparatus (30) as recited in claim 6, wherein the forward link demodulating means (32) includes:
a Digital Video Broadcasting-Satellite 2 (DVB-S2) adaptive coding/demodulating unit (321) for performing demodulation and channel decoding on a baseband frame including the broadcasting and communication data transmitted from the mobile station RF processing means (31);
a baseband header analyzing unit (322) for extracting and analyzing a baseband header of a baseband frame transmitted from the DVB-S2 adaptive coding/demodulating unit (321);
a first baseband frame processing unit (323) for outputting the broadcasting data of the MPEG-TS packet format based on a DVB-S2 standard; and
an MPEG-TS packet creating unit (325) for receiving a Generic Stream (GS) stream of an IP packet format including the communication data from the baseband header analyzing unit (322) through a second baseband frame processing unit (324), transforming and demultiplexing the GS stream of the IP packet format into the MPEG-TS packet format.

8. The receiving apparatus (30) as recited in claim 7, wherein the baseband header analyzing unit (322) recognizes a transmitting method of the baseband frame, data field length information and formats of the data including MPEG-TS/GS and transmits the baseband header of the extracted baseband frame to the first and second frame processing units (323, 324),

9. The receiving apparatus (30) as recited in claim 8, wherein the MPEG-TS packet creating unit (325) performs first transform on the GS stream of the IP packet format into an MPE format and performs second transform on the GS stream of the IP packet format into the MPEG-TS packet format.

## Patentansprüche

1. Eine Vorrichtung zum Übertragen von Rundsende- und Kommunikationsdaten (10) in einem interaktiven Satelliten-Kommunikationssystem, **gekennzeichnet durch**:
eine Rückverbindung-Demodulationseinrichtung (12) zum Durchführen von Demodulation und Kanaldecodierung auf Signal-Rausch-Verhältnis (SNR)-Informationen und Rückverbindung-Verkehrsdaten, die von einer Mehrzahl von Empfangsvorrichtungen (30) übertragen werden, über eine Zentralstations-Radiofrequenz (RF)-Verarbeitungseinrichtung (11) zum Durchführen des Hochkonvertierens und Herunterkonvertierens einer Frequenz von eingegebenen Daten;
eine Zentralstations-Verbindungseinrichtung (13), die mit dem Internet verbindet und Kommunikationsdaten basierend auf einem Internetprotokoll (IP)-Paket überträgt/empfängt;
eine Rundsendedaten-Erzeugungseinrichtung (14) zum Erzeugen der undsendedaten eines Moving Picture Experts Group Transport Stroms (MPEG-TS)-Paketformats; und
eine Vorwärtsverbindung-Modulationseinrichtung (15) zum separaten übertragen der Rundsendedaten des MPEG-TS Paketformats und der IP-Paket basierten Kommunikationsdaten auf einer Basisbandframe-Basis zu jeder Empfangsvorrichtung (30) unter simultaner Verwendung von einer einer Mehrzahl von Übertragungsverfahren, Anwenden eines Übertragungsverfahrens auf jede Empfangsvorrichtung (30) basierend auf den SNR, Übertragen einer Mehrzahl von Rundsendeströmen basierend auf dem Übertragungsverfahren, das für jede Empfangsvorrichtung (30) simultan angewendet wurde, und Mappen und Übertragen der Kommunikationsdaten des IP-Paketformats, das von der Zentralstations-Verbindungseinrichtung (13) angegeben wurde, in Übereinstimmung mit dem Übertragungsverfahren, das auf jede Empfangsvorrichtung (30) basierend auf einer Ziel-IP-Adresse angewendet wird.

2. Die Übertragungsvorrichtung (10) nach Anspruch 1, wobei die Vorwärtsverbindungs-Modulationseinrichtung (15) einschließt:
eine Steuerinformations-Managingeinheit (151) zum Ermitteln des in der Übertragung zu jeder Empfangsvorrichtung (30) zu verwendenden Übertragungsverfahrens basierend auf jedem SNR, das von der Rückverbindungs-Demodulationseinrichtung (12) übertragen wurde, und Managen des Übertragungsverfahrens von jeder Empfangsvorrichtung (30), Mobilstations-Identifikations (ID), die jeder Empfangsvorrichtung (30) zugewiesen ist, und Ziel-IP-Adressinformationen eines Benutzer-Personal-Computers (PC) (37), der auf die Mobilstations-ID gemappt wurde;
eine lassifiziereinheit (152) zum Klassifizieren der Rundsende- und Kommunikationsdaten in Übereinstimmung mit jedem Übertragungsverfahren, das jeder Empfangsvorrichtung (30) zugewiesen wurde;
eine Daten-Akkumulationseinheit (153) zum Akkumulieren der Kommunikationsdaten des klassifizierten IP-Paketformats in einer Übertragungsschlange in Übereinstimmung mit jedem Übertragungsverfahren;
eine Datenfeld-Erzeugungseinheit (154) zum Bilden eines Basisband-Datenfelds, um die Rundesendedaten des MPEG-2-TS-Paketformats in Übereinstimmung mit jedem Frame zu übertragen;
eine Einpass-/Ermittlungseinheit (155) zum Einpassen von Übertragungsdaten für jedes Übertragungsverfahren, die einem Puffer der Datenakkumulationseinheit (153) und der Datenfeld-Erzeugunseinheit (154) gespeichert sind, solange eine Übertragungsdatenfeldlänge, die im Voraus definiert wurde und den Puffer der Datenfeld-Erzeugungseinheit (154) und der Datenakkumulationseinheit (153), die die auszugebenden Rundsendedaten und Kommunikationsdaten akkumulieren;
eine Basisband-Header-Erzeugungseinheit (156) zum Bilden eines Basisbandframes; und
eine adaptive Digital Video Broadcasting-Satellite 2 (DVB-S2) Codier-/Modulationseinheit (157) zum Durchführen von Modulation und Kanalcodierung auf dem Basisbandframe.

3. Die Übertragungsvorrichtung (10) wie definiert in Anspruch 1 oder 2, wobei jedes Übertragungsverfahren eine Übertragungsschlange in der Datenakkumulationseinheit (153) betreibt.

4. Die Übertragungsvorrichtung (10) wie definiert in einem der Ansprüche 1 bis 3, wobei die Einpass-/Ermittlungseinheit (155) eine Priorität jedes Übertragungsverfahrens definiert.

5. Die Übertragungsvorrichtung wie definiert in einem der Ansprüche 1 bis 4, wobei die Basisband-Header-Erzeugungseinheit (156) ein Basisbandframe erzeugt durch Erzeugen eines Basisband-Headers, der Charakteristika des Datenfelds zeigt und durch Hinzufügen des Basisband-Headers zu einem Kopf des Basisband-Datenfelds.

6. Eine Vorrichtung zum Empfangen von Rundsende- und Kommunikationsdaten (30) in einem interaktiven Satelliten-Kommunikationssystem, **gekennzeichnet durch**:
eine Vorwärtsverbindung-Demodulationseinrichtung (32) zum Durchführen von Modus- und Stream-de-adaptiver-Demodulation und Kanaldecodierung auf den Rundsende- und Kommunikationsdaten auf einer Basisbandframe-Basis, die von einer Übertragungsvorrichtung (10) übertragen werden **durch** eine Mobilstations-Radiofrequenz (RF)-Verarbeitungseinrichtung (31) zum Durchführen von Hochkonvertieren und Herunterkonvertieren auf einer Frequenz von eingegebenen Daten, Ausgeben der Rundsende-Daten in ein Moving Picture Experts Group Transportstrom (MPEG-TS)-Paketformat, Transformieren der Kommunikationsdaten basierend auf einem Internetprotokoll (IP)-Paket in das MPEG-TS-Paket und Ausgeben der Kommunikationsdaten;
eine Motion Picture Experts Group (MPEG)-Decodiereinrichtung (33) zum Demultiplexen der Rundsende- und Kommunikationsdaten aus dem MPEG-TS-Paketformat, das von der Vorwärtsverbindungs-Demodulationseinrichtung (32) übertragen wurde;
eine Datenverarbeitungseinrichtung (34) zum Übertragen/Empfangen der Kommunikationsdaten mit einem Benutzerterminal, das mit der Empfangsvorrichtung (30) verbunden ist und Erzeugen eines Signal-zu-Rauschverhältnisses (SNR); und
eine Rückverbindungs-Modulationseinrichtung (35) zum Durchführen von Modulation und Kanalcodierung auf den SNR und den Rückverbindungs-Verkehrsdaten, die von der Datenverarbeitungseinrichtung (34) übertragen wurden, und Übertragen des SNR und der Rückverbindungs-Verkehrsdaten an die Mobilstations-RF-Verarbeitungseinrichtung (31).

7. Die Empfangvorrichtung (30) wie definiert in Anspruch 6, wobei die Vorwärtsverbindungs-Demodulationseinrichtung (32) einschließt:
eine adaptive Digital Video Broadcasting-Satellite 2 (DVB-S2) Codier-/Demodulationseinheit (321) zum Durchführen von Demodulation und Kanaldecodierung auf einem Basisbandframe einschließend die undsende- und Kommunikationsdaten, die von der Mobilstation RF-Bearbeitungseinrichtung (31) übertragen wurden;
eine Basisband-Header-Analysiereinheit (322) zum Extrahieren und Analysieren eines Basisband-Headers eines Basisbandframes, das von der adaptiven DVB-S2-Codier-/Demodulationseinheit (321) übertragen wurde;
eine erste Basisbandframe-Verarbeitungseinheit (323) zum Ausgeben der Rundsendedaten des PEG-TS Paketformats basierend auf einem DVB-S2-Standard; und
eine MPEG-TS-Paketerzeugungseinheit (325) zum Empfangen eines Generic Stream (GS)-Stroms eines IP-Paketformats einschließend die Kommunikationsdaten von der Basisband-Header-Analysiereinheit (322) durch eine zweite Basisbandframe-Verarbeitungseinheit (324), Transformieren und Demultiplexer des GS-Stroms des IP-Paketformats in das MPEG-TS-Paketformat.

8. Die Empfangvorrichtung (30) wie definiert in Anspruch 7, wobei die Basisband-Header-Analysiereinheit (322) ein Übertragungsverfahren des Basisbandframes erkennt, sowie Datenfeld-Längenfeldinformation und Formate der Daten einschließend MPEG-TS/GS und den Basisband-Header des extrahierten Basisbandframes an die ersten und zweite Frameverarbeitungseinheit (323, 324) überträgt.

9. Die Empfangvorrichtung (30) wie definiert in Anspruch 8, wobei die MPEG-TS-Paketerzeugungseinheit (325) eine erste Transformation auf dem GS-Strom des IP-Paketformats in ein MPE-Format durchführt und eine zweite Transformation auf dem GS-Strom des IP-Paketformats in das MPEG-TS-Paketformat durchführt.

## Revendications

1. Appareil de transmission de données de radiodiffusion et de communication (10) dans un système de communication par satellite interactif, **caractérisé par** :
un moyen de démodulation de liaison vers l'arrière (12) pour réaliser une démodulation et un décodage de canal sur des informations de rapport signal sur bruit (SNR) et des données de trafic de liaison vers l'arrière transmises par une pluralité d'appareils de réception (30), par l'intermédiaire d'un moyen de traitement radiofréquence (RF) de station centrale (11) pour réaliser une conversion ascendante et une conversion descendante sur une fréquence de données d'entrée ;
un moyen de connexion de station centrale (13) qui se connecte à l'Internet et transmet/reçoit des données de communication basées sur un paquet de protocole Internet (IP) ;
un moyen de création de données de radiodiffusion (14) pour créer des données de radiodiffusion d'un format de paquet de flux de transport du groupe d'experts en images animées (MPEG-TS) ; et
un moyen de modulation de liaison vers l'avant (15) pour transmettre séparément les données de radiodiffusion du format de paquet MPEG-TS et les données de communication à base de paquet IP sur une base de trame de bande de base à chaque appareil de réception (30) en utilisant l'un d'une pluralité de procédés de transmission simultanément, pour appliquer un procédé de transmission à chaque appareil de réception (30) en se basant sur le SNR, pour transmettre une pluralité de flux de radiodiffusion en se basant sur le procédé de transmission appliqué à chaque appareil de réception (30) simultanément, et pour mapper et transmettre les données de communication du format de paquet IP entré par le moyen de connexion de station centrale (13) selon le procédé de transmission appliqué à chaque appareil de réception (30) basé sur une adresse IP de destination.

2. Appareil de transmission (10) selon la revendication 1, dans lequel le moyen de modulation de liaison vers l'avant (15) comprend :
une unité de gestion d'informations de commande (151) pour déterminer le procédé de transmission à utiliser lors de la transmission à chaque appareil de réception (30) en se basant sur chaque SNR transmis par le moyen de démodulation de liaison vers l'arrière (12), et pour gérer le procédé de transmission de chaque appareil de réception (30), l'identification de station mobile (ID) allouée à chaque appareil de réception (30), et les informations d'adresse IP de destination d'un ordinateur personnel (37) d'utilisateur (PC) mappé sur l'ID de station mobile ;
une unité de classement (152) pour classer les données de radiodiffusion et de communication selon chaque procédé de transmission alloué à chaque appareil de réception (30) ;
une unité d'accumulation de données (153) pour accumuler les données de communication du format de paquet IP classé dans une file d'attente de transmission selon chaque procédé de transmission ;
une unité de création de champ de données (154) pour former un champ de données de bande de base afin de transmettre les données de radiodiffusion du format de paquet MPEG-2 TS selon chaque trame ;
une unité de découpe/détermination (155) pour découper des données de transmission de chaque procédé de transmission stockées dans une mémoire tampon de l'unité d'accumulation de données (153) et l'unité de création de champ de données (154) de la même longueur qu'une longueur de champ de données de transmission définie à l'avance et pour déterminer la mémoire tampon de l'unité de création de champ de données (154) et de l'unité d'accumulation de données (153) accumulant les données de radiodiffusion et de communication de données à produire en sortie ;
une unité de création d'en-tête de bande de base (156) pour former une trame de bande de base ; et
une unité d'encodage/modulation adaptative de satellite 2 de radiodiffusion vidéo numérique (DVB-S2) (157) pour réaliser une modulation et un encodage de canal sur la trame de bande de base.

3. Appareil de transmission (10) selon la revendication 1 ou 2, dans lequel chaque procédé de transmission actionne une file d'attente de transmission dans l'unité d'accumulation de données (153).

4. Appareil de transmission (10) selon l'une des revendications 1 à 3, dans lequel l'unité de découpe/détermination (155) définit une priorité de chaque procédé de transmission.

5. Appareil de transmission (10) selon l'une des revendications 1 à 4, dans lequel l'unité de création d'en-tête de bande de base (156) forme une trame de bande de base en créant un en-tête de bande de base montrant des caractéristiques du champ de données et ajoutant l'en-tête de bande de base à une tête du champ de données de bande de base.

6. Appareil de réception de données de radiodiffusion et de communication (30) dans un système de communication par satellite interactif, **caractérisé par** :
un moyen de démodulation de liaison vers l'avant (32) pour réaliser une démodulation désadaptative de mode et de flux et un décodage de canal sur les données de radiodiffusion et de communication sur une base de trame de bande de base transmise par un appareil de transmission (10), par l'intermédiaire d'un moyen de traitement radiofréquence (RF) de station mobile (31) pour réaliser une conversion ascendante et une conversion descendante sur une fréquence de données entrée, pour émettre en sortie des données de radiodiffusion dans un format de paquet de flux de transport du groupe d'experts en images animées (MPEG-TS), pour transformer des données de communication en se basant sur un paquet de protocole Internet (IP) en le paquet MPEG-TS et émettre en sortie les données de communication ;
un moyen de décodage des groupes d'experts en images animées (MPEG) (33) pour démultiplexer les données de radiodiffusion et de communication du format de paquet MPEG-TS transmises par le moyen de démodulation de liaison vers l'avant (32) ;
un moyen de traitement de données (34) pour transmettre/recevoir les données de communication avec un terminal utilisateur connecté à l'appareil de réception (30) et pour créer un rapport signal sur bruit (SNR) ; et
un moyen de modulation de liaison vers l'arrière (35) pour réaliser une modulation et un encodage de canal sur le SNR et les données de trafic de liaison vers l'arrière transmises par le moyen de traitement de données (34) et pour transmettre le SNR et les données de trafic de liaison vers l'arrière au moyen de traitement RF de station mobile (31).

7. Appareil de réception (30) selon la revendication 6, dans lequel le moyen de démodulation de liaison vers l'avant (32) comprend :
une unité d'encodage/démodulation adaptative par satellite 2 de radiodiffusion vidéo numérique (DVB-S2) (321) pour réaliser une démodulation et un décodage de canal sur une trame de bande de base comprenant les données de radiodiffusion et de communication transmises par le moyen de traitement RF de station mobile (31) ;
une unité d'analyse d'en-tête de bande de base (322) pour extraire et analyser un en-tête de bande de base d'une trame de bande de base transmis par l'unité d'encodage/démodulation adaptative DVB-S2 (321) ;
une première unité de traitement de trame de bande de base (323) pour émettre en sortie les données de radiodiffusion du format de paquet MPEG-TS en se basant sur une norme DVB-S2 ; et
une unité de création de paquet MPEG-TS (325) pour recevoir un flux de flux générique (GS) d'un format de paquet IP comprenant les données de communication provenant de l'unité d'analyse d'en-tête de bande de base (322) par l'intermédiaire d'une seconde unité de traitement de trame de bande de base (324), pour transformer et démultiplexer le flux GS du format de paquet IP en le format de paquet EPG-TS.

8. Appareil de réception (30) selon la revendication 7, dans lequel l'unité d'analyse d'en-tête de bande de base (322) reconnaît un procédé de transmission de la trame de bande de base, d'informations de longueur de champ de données et de formats des données comprenant MEPG-TS/GS et transmet l'en-tête de bande de base de la trame de bande de base extraite aux première et seconde unités de traitement de trame (323, 324).

9. Appareil de réception (30) selon la revendication 8, dans lequel l'unité de création de paquet MPEG-TS (325) réalise une première transformée sur le flux GS du format de paquet IP en un format MPE et réalise une seconde transformée sur le flux GS du format de paquet IP en format de paquet MPEG-TS.
